(19) Europäisches Patentamt
European Patent Office
Office européen des brevets

(11) **EP 1 870 854 A2**

(12) **EUROPEAN PATENT APPLICATION**

(43) Date of publication:
**26.12.2007 Bulletin 2007/52**

(51) Int Cl.:
***G06T 7/00*** (2006.01)     ***G06T 5/00*** (2006.01)

(21) Application number: **07108654.0**

(22) Date of filing: **22.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.06.2006   KR 20060056245**

(71) Applicant: **Samsung Electronics Co., Ltd.
Suwon-si, Gyeonggi-Do (KR)**

(72) Inventor: **Lee, June-Sok
Seoul (KR)**

(74) Representative: **Grünecker, Kinkeldey,
Stockmair & Schwanhäusser
Anwaltssozietät
Maximilianstrasse 58
80538 München (DE)**

(54) **Apparatus and method for panoramic photography in portable terminal**

(57)     Provided are an apparatus and a method for panoramic photography in a portable terminal. The apparatus includes a camera unit for photographing an image; a memory unit for storing the photographed image; a display unit for displaying an overlapped area during panoramic photographing; a guide unit for selecting an overlapped area from a previous image stored in the memory unit during the panoramic photographing to display the overlapped area into the display unit; and a merge unit for searching in an overlapped area of a current image an interval which is identical to a searching interval contained in the overlapped area of the previous image, and merging the previous image and the current image so that the searching interval and the identical interval overlap, and generating a merged image.

FIG.1

**Description**

**PRIORITY**

This application claims priority under 35 U.S.C. § 119 to an application filed in the Korean Intellectual Property Office on June 22, 2006 and assigned Serial No. 2006-56245, the contents of which are incorporated herein by reference.

**BACKGROUND OF THE INVENTION**

1. Field of the Invention

The present invention relates generally to an apparatus and a method for panoramic photography in a portable terminal, and more particularly, to an apparatus and a method for panoramic photography, which searches an overlapped area and merge images, thereby enhancing the quality of merged images during panoramic photography.

2. Description of the Related Art

Portable terminals such as a mobile communication terminal and a Personal Digital Assistant (PDA) have become widely used lately. These portable terminals provide users with various functions such as taking pictures with a built-in digital camera, watching movies, watching digital broadcasting programs, editing documents, and playing games in addition to simple calling and scheduling. Their availability increases as they provide users with various additional functions.

Of special interest are portable terminals that support panoramic photography with a built-in camera. The panoramic photography is achieved by obtaining two or more images and merging the obtained images into one image. A new technology is required to accurately align an overlapped area between two images that will be merged to achieve a natural resulting image. To increase the accuracy of the overlapped area, there are an alignment equipment method and an On Screen Display (OSD) guide method in conventional methods.

The alignment equipment method merges two or more images by providing additional aiming equipment to enhance the accuracy of the overlapped area. The OSD guide method displays a portion of a previous image taken before into a display unit as a guide for next image photographing.

Since the alignment equipment method requires the additional aiming equipment, portability is poor and product cost increases. The OSD guide method is technically simple by semi-transparently displaying a portion of a previous image into the display unit. However, the OSD guide method decreases user convenience because a user has to adjust the width and height base line of an overlapped region, and may display an incorrect resulting image because errors easily occur in aligning the overlapped area through a small display unit.

On the other hand, photographing parameters such auto white balance, auto exposure balance, etc. are often identically set for all images during panoramic photographing although each obtained image is taken under a different optical angle and photographing position. As a result, each obtained image represents respectively different intensity and color tone. Therefore, an interface becomes unnatural and an overall color tone becomes uneven.

**SUMMARY OF THE INVENTION**

An object of the present invention is to substantially solve at least the above problems and/or disadvantages and to provide at least the advantages below. Accordingly, an object of the present invention is to provide an apparatus and a method for panoramic photography in a portable terminal.

Another object of the present invention is to provide an apparatus and a method for panoramic photography in a portable terminal, which search an overlapped area during panorama photographing to merge images.

Another object of the present invention is to provide an apparatus and a method for panoramic photography in a portable terminal, which enhance an image quality of a merged image during photographing in a panoramic mode.

According to one aspect of the present invention, an apparatus for panoramic photography in a portable terminal includes a camera unit for photographing an image; a memory unit for storing the photographed image; a display unit for displaying an overlapped area during panoramic photographing; a guide unit for selecting the overlapped area from a previous image stored in the memory unit during the panoramic photographing and providing the overlapped area into the display unit for displaying the overlapped area; and a merge unit for searching in the overlapped area an identical interval which is to be identical to a searching interval in an overlapped area of a current image, and merging the previous image and the current image to overlap the searching interval of the previous image and the identical interval of the current image, and generating a merged image.

According to another aspect of the present invention, a method for panoramic photography in a portable terminal includes displaying an overlapped area of a previous image into a display unit during panoramic photographing; photographing a current image; searching an interval identical to a searching interval of the previous image in an overlapped area of the current image; and merging the previous image and the current image to overlap the searching interval of the previous image and the identical interval of the current image, and generating a merged image.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of a panoramic photography apparatus according to the present invention;
FIG. 2 is a flow chart illustrating processes for panoramic photography according to the present invention; and
FIGs. 3A to 3C are plan views of an overlapped area, a searching interval, and a searching vector for panoramic photography according to the present invention

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

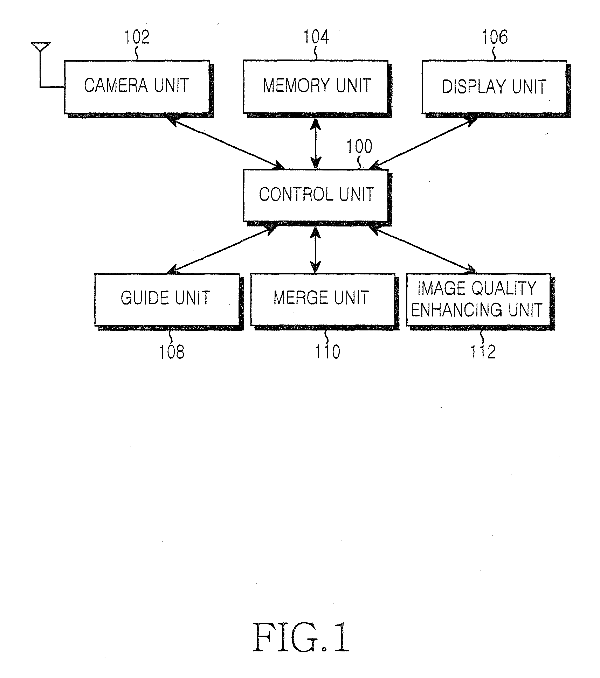

The present invention provides an apparatus and a method for panoramic photography that search an overlapped area, merge images, and enhance the image quality of the merged images during panoramic photographing. Hereinafter, the apparatus will be described in detail with reference to FIG. 1.

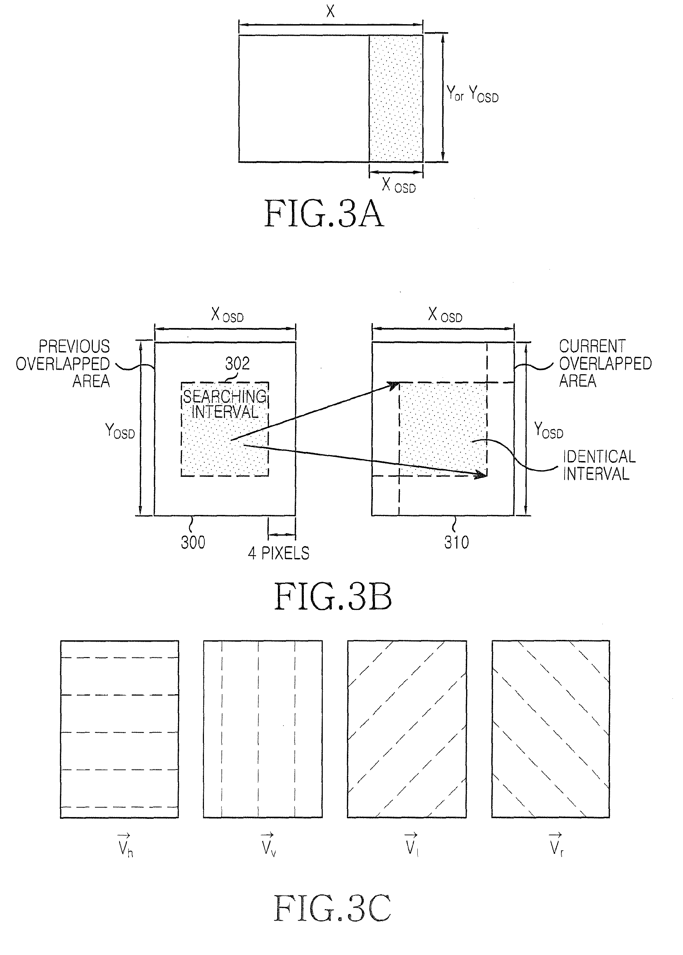

FIG. 1 is a block diagram of a panoramic photography apparatus according to the present invention. FIG. 1 will be described with reference to FIGs. 3A to 3C. FIGs. 3A to 3C are plan views respectively of an overlapped area of a previous image, a searching interval within said overlapped interval, and a searching vector for panoramic photography according to the present invention.

Referring to FIG. 1, a panoramic photography apparatus includes a control unit 100, a camera unit 102, a memory unit 104, a display unit 106, a guide unit 108, a merge unit 110, and an image quality enhancing unit 112.

The camera unit 102 concentrates the light of an optical image by a command of the control unit 100, changes a focal point, and photographs the incident optical image through photoelectric conversion. The memory unit 104 stores photographing information such as a flash operation, the degree of exposure, etc. during photographing an image through the camera unit 102 and photographing a first image for panorama photographing.

The display unit 106 semi-transparently displays an overlapped area that the guide unit 108 selects. The overlapped area is a portion of a previous image taken before. The display unit 106 may use a liquid crystal display (LCD). The overlapped area is a guide for combining a next photographed image and is in a direction in which the previous image merges with the next image. FIG. 3A represents an overlapped area when the next photographed image is merged into the right of the previous image. The overlapped area has the size of $X_{OSD}$ and $Y_{OSD}$. The size of the overlapped area is expressed as Equation (1):

$$X_{OSD} = \alpha X, \alpha = \{x \mid 0.1 \le x \le 0.5\}$$
$$Y_{OSD} = Y$$

$$\ldots \ldots (1)$$

where $X_{OSD}$ is the width of an overlapped area, $Y_{OSD}$ is the height of an overlapped area, and $\alpha$ is weight determining the width of an overlapped area.

The guide unit 108 selects a portion of the previous image stored in the memory unit 104 during panoramic photographing as an overlapped area and supplies the overlapped area into the display unit 106.

The merge unit 110 selects a searching interval in the overlapped area of the previous image during panoramic photographing, and searches in an overlapped area of a currently photographed image an interval which is to be identical to the searching interval in the overlapped area of the previous photographed image. The merge unit 110 merges two images by overlapping the searching interval of the previous image and the identical interval of the current image once the identical interval is found. The identical interval is the overlapped area of the previous image, i.e., the searching interval 302 of the previous overlapped area 300. The identical interval is searched in the current overlapped area 310, i.e., an overlapped area of the current image. The size of the searching interval 302 has the size excluding a predetermined portion of up and down and left and right of the previous overlapped area 300. For example, when the size excluding from the previous overlapped area 300 is eight pixels, the size of the searching interval 302 is $(X_{OSD}-8)(Y_{OSD}-8)$.

The merge unit 110 searches the identical interval in the current overlapped area 310 by using a Natural Global Motion (NGM) vector expressed as Equation (2), and decides an interval having smallest vector value as the identical interval by searching the overlapped area by the size of the searching interval 302.

$$\vec{v} = \arg\min[\sum_{i=1}^{N}(P_p(i) - P_c(i))^2]$$

$$\ldots\ldots(2)$$

wherein $\bar{v}$ is NGM, $P_p(i)$ is an $i^{th}$ pixel value of a previous image, $P_c(i)$ is an $i^{th}$ pixel value of a current image, and N is the number of pixels in an overlapped area.

Moreover, an amount of calculation increases when the merge unit 110 performs NGM searching on all pixels of an overlapped area. The merge unit 110 defines template vectors in horizontal, vertical, and diagonal directions, and utilizes the final NGM that is an average of the template NGMs. Referring to FIG. 3C, the template vectors are the predetermined number of vectors having predetermined directions in the searching interval. There are a horizontal vector $\bar{v}_h$, a vertical vector $\bar{v}_v$, a left-down diagonal vector $\bar{v}_l$, and a right-down diagonal vector $\bar{v}_r$. Additionally, by using the template vectors, the final NGM is expressed as Equation (3):

$$\vec{V} = \frac{1}{4}(\vec{v}_h + \vec{v}_v + \vec{v}_l + \vec{v}_r)$$

$$\ldots\ldots(3)$$

wherein $\bar{V}$ is a final NGM, $\bar{v}_h$ is a horizontal vector, $\bar{v}_v$ is a vertical vector, $\bar{v}_l$ is a left-down diagonal vector, and $\bar{v}_r$ is a right-down diagonal vector.

That is, the merge unit 110 measures the four NGMs using Equation (2) according to the vectors of a pixel pattern having total four directionalities, measures the final NGM by averaging the measured four NGMs through Equation (3), and decides an interval having the measured smallest final NGM as an interval identical to the searching interval 302.

The image quality enhancing unit 112 processes an interface of a merged area where two images actually overlap by using a low band pass filter, the interface being processed according to Equation (4), and then processes the merged image to be in a uniform color by using a histogram equalization according to Equation (5).

$$P_0(x) = \frac{1}{9}\sum_{k=0}^{8}P_i(k)$$

$$\ldots\ldots(4)$$

wherein $P_0(x)$ is a $x^{th}$ pixel passing through a low band pass filter, k is an order of being input into a low band pass filter in total nine pixels including a $x^{th}$ pixel and neighboring eight pixels, and $P_i(k)$ is a $k^{th}$ input of a low band pass filter.

$$P_0(x) = \frac{P_{max}}{N \times M}H(x)$$

$$\ldots\ldots(5)$$

wherein $P_0(x)$ is a $x^{th}$ pixel value passing through a histogram equalization, $P_{max}$ is the maximum pixel value for expressing an image, N is the width of an image, M is the height of an image, and H(x) is an accumulated histogram value of an $x^{th}$ pixel.

The control unit 100 controls the guide unit 108, the merge unit 110, and the image enhancing unit 112. That is, the control unit 100 can control functions of the guide unit 108, the merge unit 110, and the image quality enhancing unit 112. The reason for separating the above units is to explain their respective functions. Accordingly, when embodying an actual product, all functions, or a portion of the functions can be processed in the control unit 100.
Also, the guide unit 108, the merge unit 110 and the image enhancing unit 112 are included in the control unit 100.

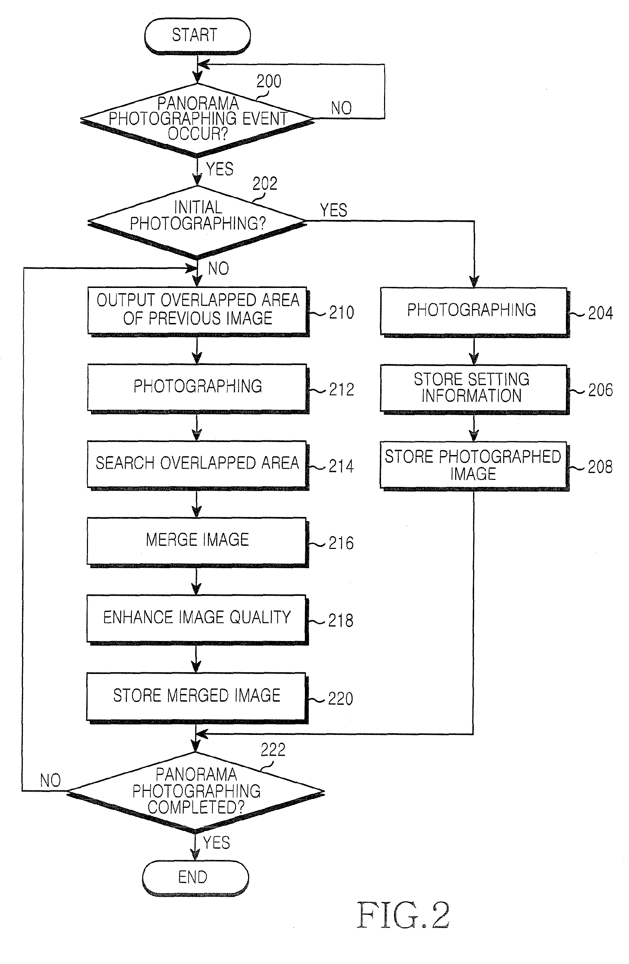

Hereinafter, a method for panoramic photography in a portable terminal will be described with reference to FIG. 2. FIG. 2 is a flow chart illustrating processes for panoramic photography according to one embodiment of the present invention.

Referring to FIG. 2, the panoramic photography apparatus determines whether the panoramic photography is taken for the first time in step 202 when a panoramic photography event occurs in step 200. In step 204, when the panoramic photograph is taken for the first time, an initial image is photographed by using photoelectric conversion. Then, in step 206, setting parameters such as auto white balance and auto exposure balance are stored. In step 208, the initial image in step 204 is stored, and then it is determined whether panoramic photographing is finished in step 222.

When panoramic photographing is not finished in step 222, an overlapped area of a previous image is displayed on the display unit 106 in step 210. In step 212, a current image is photographed. Then, an interval to be identical to a searching interval of the overlapped area of the previous image and the current image is searched in the overlapped area of the current image in step 214. In step 216, the previous image and the current image are merged by overlapping the identical interval on the searching interval. In step 218, the merged image quality is enhanced by using a low band pass filter and histogram equalization. The process then proceeds to step 222. The steps 210 through 220 repeats until panoramic photographing is completed in step 222.

In step 222, when it is detected that panoramic photographing is completed, process is terminated.

As described above, the present invention provides an apparatus and a method for panoramic photography, which search an overlapped area, merge images, and enhance the quality of the merged images during panoramic photographing, thereby reducing errors that can occur during image merging, and providing natural images through the enhancement of the merged image.

While the invention has been shown and described with reference to certain preferred embodiments thereof, it will be understood by those skilled in the art that various changes in form and details may be made therein without departing from the spirit and scope of the invention as defined by the appended claims.

**Claims**

1. An apparatus, in particular for use in a portable terminal for panoramic photography, the apparatus comprising:

   a camera unit for photographing an image;
   a memory unit for storing the photographed image;
   a display unit for displaying an overlapped area during the panoramic photographing;
   a guide unit for selecting the overlapped area from a previous image stored in the memory unit during the panoramic photographing to display the overlapped area on the display unit; and
   a merge unit for searching in an overlapped area of a current image an interval which is identical to a searching interval contained in the overlapped area of the previous image, merging the previous image and the current image so that the searching interval and the identical interval overlap, and generating a merged image.

2. The apparatus of claim 1, further comprising an image quality enhancing unit for enhancing an image quality of the merged image.

3. The apparatus of claim 1 or 2, wherein the merge unit searches the overlapped area of the current image by a size of the searching interval to find the identical interval through an NGM (Natural Global Motion) vector which is calculated by the following equation, and decides an interval having the smallest NGM vector value as the identical interval.

$$\vec{v} = \arg\min[\sum_{i=1}^{N}(P_p(i) - P_c(i))^2]$$

wherein $\vec{v}$ is NGM, $P_p(i)$ is an $i^{th}$ pixel value of a previous image, $P_c(i)$ is an $i^{th}$ pixel value of a current image, and N is the number of pixels in an overlapped area.

4.  The apparatus of any one of claims 1 to 3, wherein the merge unit defines a final NGM, and decides an interval having the smallest final NGM value as the identical interval, the final NGM being calculated by averaging NGMs in a template having a predetermined number of vectors.

5.  The apparatus of claim 4, wherein the averaging the NGMs is calculated by using the following equation:

$$\vec{V} = \frac{1}{4}(\vec{v}_h + \vec{v}_v + \vec{v}_l + \vec{v}_r)$$

wherein $\vec{V}$ is a final NGM, $\vec{v}_h$ is a horizontal vector, $\vec{v}_v$ is a vertical vector, $\vec{v}_l$ is a left-down diagonal vector, and $\vec{v}_r$ is a right-down diagonal vector.

6.  The apparatus of claim 5, wherein the horizontal vector, the vertical vector, the left-down diagonal vector, and the right-down diagonal vector are calculated by using the following equation;

$$\vec{v} = \arg\min[\sum_{i=1}^{N}(P_p(i) - P_c(i))^2]$$

wherein $\vec{v}$ is NGM, $P_p(i)$ is an $i^{th}$ pixel value of a previous image, $P_c(i)$ is an $i^{th}$ pixel value of a current image, and N is the number of pixels in an overlapped area.

7.  The apparatus of claim 2 or claim 2 in combination with any one of claims 3 to 6, wherein the image quality enhancing unit enhances an image quality of an interface of a combined area in the merged image by using a low band pass filter, the combined area being actually overlapped by the previous image and the current image.

8.  The apparatus of claim 7, wherein the image quality enhancing unit enhances an image quality of the interface by using the low band pass filter, the interface being calculated by the following equation:

$$P_0(x) = \frac{1}{9}\sum_{k=0}^{8}P_i(k)$$

wherein $P_0(x)$ is a $x^{th}$ pixel passing through a low band pass filter, k is an order of being inputted into a low band pass filter in total nine pixels including a $x^{th}$ pixel and neighboring eight pixels, and $P_i(k)$ is a $k^{th}$ input of a low band pass filter.

9.  The apparatus of claim 2 or claim 2 in combination with any one of claims 3 to 8, wherein the image quality enhancing unit makes the merged image in a uniform color by using histogram equalization.

10. The apparatus of claim 9, wherein the histogram equalization is calculated by the following equation:

$$P_0(x) = \frac{P_{max}}{N \times M}H(x)$$

wherein $P_0(x)$ is a $x^{th}$ pixel value passing through a histogram equalization, $P_{max}$ is a maximum pixel value for expressing an image, N is a width of an image, M is a height of an image, and H(x) is an accumulated histogram value of an $x^{th}$ pixel.

11. A method to be performed in a portable terminal for panoramic photography, the method comprising the steps of:

   displaying an overlapped area of a previous image into a display unit during panoramic photographing;
   photographing a current image;
   searching in an overlapped area of the current image for an interval which is identical to a searching interval contained in the overlapped area of the previous image; and
   merging the previous image and the current image so that the searching interval and the identical interval overlap, and generating a merged image.

12. The method of claim 11, wherein, after generating the merged image, further comprises the step of enhancing an image quality of the merged image.

13. The method of claim 11 or 12, wherein searching of the identical interval comprises searching the overlapped area of the current image by a size of the searching interval to find the identical interval through an NGM (Natural Global Motion) vector which is defined by the following equation, and deciding an interval having the smallest NGM vector value as the identical interval.

$$\vec{v} = \arg\min[\sum_{i=1}^{N}(P_p(i) - P_c(i))^2]$$

wherein $\vec{v}$ is NGM, $P_p(i)$ is an $i^{th}$ pixel value of a previous image, $P_c(i)$ is an $i^{th}$ pixel value of the current image, and N is the number of pixels in the overlapped area of the current image.

14. The method of any one of claims 11 to 13, wherein searching of the identical interval comprises:

   defining a final NGM calculated by averaging NGMs in a template having a predetermined number of vectors; and
   deciding an interval having the smallest final NGM value as the identical interval.

15. The method of claim 14, wherein averaging the NGMs is calculated by the following equation:

$$\vec{V} = \frac{1}{4}(\vec{v}_h + \vec{v}_v + \vec{v}_l + \vec{v}_r)$$

wherein $\vec{v}$ is a final NGM, $\vec{v}_h$ is a horizontal vector, $\vec{v}_v$ is a vertical vector, $\vec{v}_l$ is a left-down diagonal vector, and $\vec{v}_r$ is a right-down diagonal vector.

16. The method of claim 15, wherein the horizontal vector, the vertical vector, the left-down diagonal vector, and the right-down diagonal vector are calculated by the following equation;

$$\vec{v} = \arg\min[\sum_{i=1}^{N}(P_p(i) - P_c(i))^2]$$

wherein $\vec{v}$ is NGM, $P_p(i)$ is an $i^{th}$ pixel value of a previous image, $P_c(i)$ is an $i^{th}$ pixel value of the current image, and N is the number of pixels in the overlapped area of the current image.

**17.** The method of claim 12 or claim 12 in combination with any one of claims 13 to 16, wherein the enhancing of the image quality of the merged image comprises enhancing an image quality of an interface of a combined area by using a low band pass filter, the combined area being actually overlapped by the previous image and the current image.

**18.** The method of claim 17, wherein the enhancing of the image quality of the merged image comprises using the low band pass filter, the interface being calculated by the following equation:

$$P_0(x) = \frac{1}{9} \sum_{k=0}^{8} P_i(k)$$

wherein $P_0(x)$ is a $x^{th}$ pixel passing through a low band pass filter, k is an order of being inputted into a low band pass filter in total nine pixels including a $x^{th}$ pixel and neighboring eight pixels, and $P_i(k)$ is a $k^{th}$ input of a low band pass filter.

**19.** The method of claim 12 or claim 12 in combination with any one of claims 13 to 18, wherein the enhancing of the image quality of the merged image comprises making the merged image in a uniform color by using histogram equalization.

**20.** The method of claim 19, wherein the histogram equalization is calculated by the following equation:

$$P_0(x) = \frac{P_{max}}{N \times M} H(x)$$

wherein $P_0(x)$ is a $x^{th}$ pixel value passing through a histogram equalization, $P_{max}$ is a maximum pixel value for expressing an image, N is a width of an image, M is a height of an image, and H(x) is an accumulated histogram value of an $x^{th}$ pixel.

**21.** A portable terminal for panoramic photography, the terminal comprising:

an apparatus acoording to any one of claims 1 to 10, wherein a control unit comprises the guide unit and the merge unit.

102
104
106

CAMERA UNIT    MEMORY UNIT    DISPLAY UNIT

100

CONTROL UNIT

GUIDE UNIT    MERGE UNIT    IMAGE QUALITY ENHANCING UNIT

108    110    112

FIG.1

START

200

PANORAMA PHOTOGRAPHING EVENT OCCUR? — NO

YES

202

INITIAL PHOTOGRAPHING? — YES

NO

| OUTPUT OVERLAPPED AREA OF PREVIOUS IMAGE | ~210 |

| PHOTOGRAPHING | ~212 |

| SEARCH OVERLAPPED AREA | ~214 |

| MERGE IMAGE | ~216 |

| ENHANCE IMAGE QUALITY | ~218 |

| STORE MERGED IMAGE | ~220 |

| PHOTOGRAPHING | ~204 |

| STORE SETTING INFORMATION | ~206 |

| STORE PHOTOGRAPHED IMAGE | ~208 |

222

NO — PANORAMA PHOTOGRAPHING COMPLETED?

YES

END

FIG.2

X

$Y_{or}$ $Y_{OSD}$

$X_{OSD}$

# FIG.3A

$X_{OSD}$

$X_{OSD}$

PREVIOUS
OVERLAPPED
AREA

302

SEARCHING
INTERVAL

$Y_{OSD}$

CURRENT
OVERLAPPED
AREA

$Y_{OSD}$

IDENTICAL
INTERVAL

300

310

4 PIXELS

# FIG.3B

$\vec{V}_h$

$\vec{V}_v$

$\vec{V}_l$

$\vec{V}_r$

# FIG.3C

**EP 1 870 854 A2**

## REFERENCES CITED IN THE DESCRIPTION

**Patent documents cited in the description**

• KR 200656245